# FASCICULE DE BREVET EUROPEEN

(11) **EP 2 836 384 B1**
(45) Date de publication et mention de la délivrance du brevet: **11.05.2016**
(21) Numéro de dépôt: 13719958.4
(22) Date de dépôt: 29.03.2013
(51) Int. Cl.: B60K 15/05, B62D 25/24

(54) **ÉLÉMENT D'OBTURATION POUR TÔLE**
DICHTUNGSELEMENT FÜR BLECHE
SEALING ELEMENT FOR SHEET METAL

(30) Priorité: 10.04.2012 FR 1253244
(43) Date de publication de la demande: 18.02.2015
(73) Titulaire: Peugeot Citroën Automobiles SA, 78140 Vélizy Villacoublay (FR)
(72) Inventeur: CONVERS, Germain, F-25200 Bethoncourt (FR)
(74) Mandataire: Rosenberg, Muriel Sylvie
(86) Numéro de dépôt international: PCT/FR2013/050709
(87) Numéro de publication internationale: WO 2013/153313

(56) Documents cités:
- EP-A2- 1 090 796
- US-A- 5 906 406
- US-A1- 2008 149 640

## Description

La présente invention se rapporte à un élément d'obturation pour une tôle d'un véhicule du type automobile.

La conception d'un véhicule passe aujourd'hui, pour un même modèle, par l'intégration d'une multiplicité de fonctionnalités, parfois non compatibles entre elles.

Par exemple, il peut être prévu, sur un même modèle de véhicule, que ledit véhicule puisse être muni d'une boîte de vitesse automatique ou d'une boîte de vitesse manuelle.

Une telle conception permet d'utiliser une même ligne de montage pour des véhicules, issus du même modèle mais combinant différentes fonctionnalités, et donc de réduire les coûts de production desdits véhicules.

Cependant, avec une telle conception, le remplacement d'une fonctionnalité par une autre fonctionnalité engendre souvent des interférences entre la pièce assurant la fonctionnalité et une, voire plusieurs, autres pièces du véhicule. Par mesure de sécurité, ces interférences sont corrigées, en mettant en place des systèmes de protections mécaniques supplémentaires, particulièrement coûteux dans le cas d'implantation critique des pièces.

Le document US-A-5 906 406 décrit un bol de goulotte de remplissage pour réservoir de carburant qui divulgue les caractéristiques du préambule de la revendication 1.

Les documents US-A-2008 149 640 et EP-A-1 090 796 divulguent des modules d'obturation de réservoir de carburant.

La présente invention a pour but de proposer un élément modulaire, qui combine une fonction de remplacement d'une fonctionnalité à une fonction de protection mécanique avec le milieu environnant dudit élément.

Plus précisément, l'objet de l'invention est un élément d'obturation d'une tôle de véhicule présentant un orifice disposé selon un axe, comprenant une première partie recouvrant l'orifice ; une deuxième partie de forme sensiblement complémentaire avec l'orifice, de sorte que ladite deuxième partie soit apte à être introduite dans ledit orifice ; des moyens d'assemblage par emboîtement élastique, aptes à coopérer avec un bord dudit orifice ; et au moins un moyen de fixation à au moins une pièce du véhicule.

Un tel élément d'obturation présente l'avantage d'être modulaire. Il permet en effet de combiner une fonction de remplacement d'un élément du véhicule en obturant l'orifice, qui accueillerait ledit élément dans une autre version du véhicule, à une fonction de protection mécanique en proposant un moyen de fixation à une pièce du véhicule, de sorte à gérer les interférences entre ladite pièce et l'élément d'obturation. Un tel élément d'obturation permet également de s'affranchir de la gestion de jeu entre ledit élément d'obturation et la pièce en interférence, et d'économiser la mise en place d'une pièce supplémentaire entre l'élément d'obturation et la pièce en interférence, qui assurerait la fonction de protection mécanique.

L'au moins une pièce du véhicule est un tuyau et l'au moins un moyen de fixation comprend une languette disposée sensiblement parallèlement à l'axe de l'orifice, ladite languette étant munie de deux pattes aptes à se déformer élastiquement, lesdites pattes formant une ouverture sensiblement en forme de U, apte à recevoir le tuyau.

Un tel élément d'obturation a pour avantage de protéger le tuyau contre une usure due au frottement dudit tuyau contre l'élément d'obturation, et donc d'éviter des problèmes de fuite dus à l'usure du tuyau, sans qu'il soit nécessaire d'utiliser, en supplément de l'élément d'obturation, une agrafe de fixation du tuyau spécifique.

Préférentiellement, la deuxième partie a sensiblement la forme d'un cylindre creux, la languette étant disposée dans le prolongement de ladite deuxième partie.

Une telle disposition de la languette présente l'avantage de faciliter la fabrication de l'élément d'obturation muni de ladite languette, et donc d'en baisser le coût.

L'invention a également pour objet un véhicule muni d'un élément d'obturation, tel que précédemment décrit.

La description sera mieux comprise à la lecture de la description qui suit et à l'examen des figures qui l'accompagnent. Celles-ci sont données à titre indicatif et non limitatif de l'invention. Les figures montrent :
- Figure 1 : une vue d'une première face d'un élément d'obturation d'une tôle de véhicule dans son milieu environnant, selon un mode de réalisation de l'invention ;
- Figure 2 : une vue d'une deuxième face de l'élément d'obturation dans son milieu environnant, selon le mode de réalisation de la figure 1.

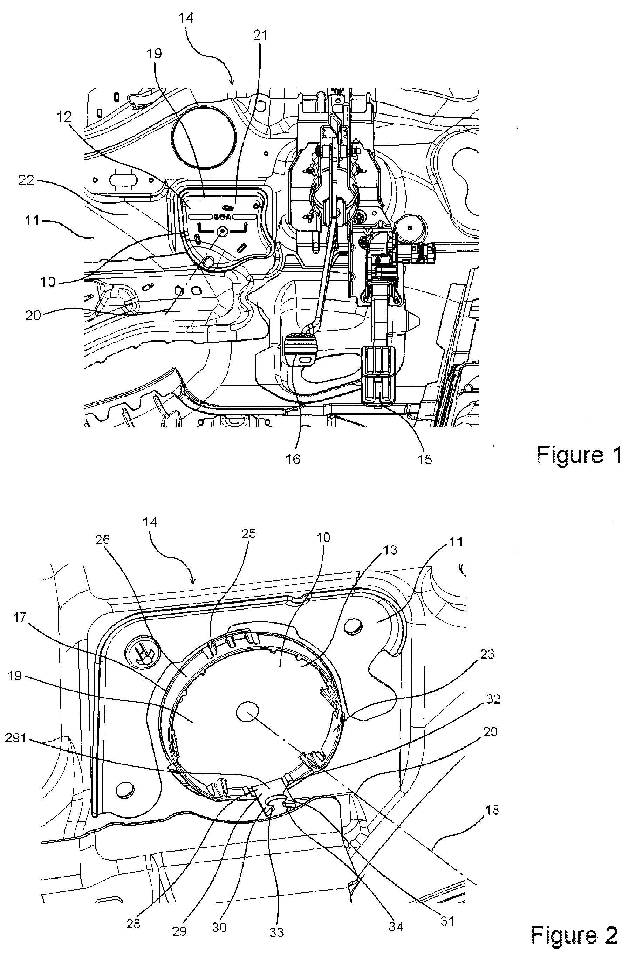

La figure 1 montre un élément 10 d'obturation d'une tôle 11 d'un véhicule du type automobile, vu d'une première face 12. La première face 12 sera considérée dans la suite de la description comme la face avant de l'élément 10 d'obturation. La figure 2 montre l'élément 10 d'obturation vu d'une deuxième face 13. La deuxième face 13 sera considérée dans la suite de la description comme la face arrière de l'élément 10 d'obturation.

Dans l'exemple, l'élément 10 d'obturation remplace une pédale d'embrayage. L'élément 10 d'obturation est disposé sur un tablier 14 inférieur d'un véhicule, à proximité d'une pédale 15 d'accélération et d'une pédale 16 de frein.

L'élément 10 d'obturation permet d'obturer un orifice 17 sensiblement circulaire, disposé selon un premier axe 18.

L'élément 10 d'obturation comporte une première partie 19 en vis-à-vis des pédales (15, 16) d'accélération et de frein. La première partie 19 a la forme d'un cylindre plein, disposé selon un deuxième axe 20, de section sensiblement carrée. Des dimensions de la section de la première partie 19 sont sensiblement supérieures à des dimensions de l'orifice 17, de sorte que la première partie 19 recouvre totalement ledit orifice.

Une surface 21 de la face 12 avant de l'élément 10 d'obturation est sensiblement parallèle à une surface 22 de la tôle 11, de sorte à minimiser un encombrement de l'élément 10 d'obturation.

L'élément 10 d'obturation comporte en outre une deuxième partie 23, visible depuis la face 13 arrière dudit élément d'obturation. La deuxième partie 23 a la forme d'un cylindre creux, disposé selon le deuxième axe 20, de section sensiblement circulaire. Le deuxième axe 20 est disposé sensiblement de manière coaxiale au premier axe 18, lorsque l'élément 10 d'obturation est assemblé à la tôle 11. Des dimensions de la section de la deuxième partie 23 sont sensiblement égales aux dimensions de l'orifice 17.

La deuxième partie 23 comporte des moyens 25 d'assemblage par emboîtement élastique, disposés sur une surface 26 externe de la deuxième partie 23. Les moyens 25 d'assemblage sont aptes à coopérer avec l'orifice 17, de sorte à bloquer l'élément 10 d'obturation sur la tôle 11.

Dans l'exemple, les moyens 25 d'assemblage par emboîtement élastique comprennent des éléments saillants vers l'extérieur de la deuxième partie 23, en l'occurrence des ailettes sensiblement symétrique par rapport au deuxième axe 20. Les ailettes 25 ont un profil en cône, qui s'évase à mesure que l'on s'approche de la première partie 19 de l'élément 10 d'obturation.

Ainsi, lors de l'assemblage de l'élément 10 d'obturation avec l'orifice 17 de la tôle 11, la deuxième partie 23 dudit élément d'obturation est insérée dans l'orifice 17, de sorte que les premier et deuxième axes (18, 20) soient sensiblement coaxiaux. La deuxième partie 23 glisse alors dans l'orifice 17. Lorsque les ailettes 25 entrent en contact avec un bord de l'orifice 17, ledit bord exerce une pression sur les ailettes, les contraignant à se déformer élastiquement vers l'intérieur de la deuxième partie 23, de sorte que les ailettes 25 affleurent la surface 26 externe de ladite deuxième partie. Puis, lorsque la deuxième partie 23 est suffisamment insérée pour que le bord de l'orifice 17 ne soit plus en contact avec les ailettes 25, lesdites ailettes reviennent à leur position de repos. La tôle 11 se trouve alors en butée contre les ailettes 25 d'un côté et la première partie 19 de l'autre côté.

L'élément 10 d'obturation comporte également un moyen 28 de fixation à une pièce du véhicule.

Dans l'exemple, la pièce est un tuyau (non représenté) de frein, et le moyen 28 de fixation est un moyen de fixation par emboîtement élastique.

Le moyen 28 de fixation comprend une languette 29 formant un plan 291, disposé sensiblement parallèlement au deuxième axe 20.

Dans l'exemple, la languette 29 est disposée dans le prolongement de la deuxième partie 23. Cependant, la languette 29 pourrait également être fixée à la première partie 19.

La languette 29 est prolongée par deux pattes (30, 31) élastiquement déformables, disposées dans le plan 291. Les pattes (30, 31) forment une ouverture 32, apte à accueillir le tuyau. L'ouverture 32 a sensiblement la forme d'un U. Une largeur de l'ouverture 32 est sensiblement égale à un diamètre d'une section du tuyau.

Les pattes (30, 31) comportent chacune, à une extrémité, une protubérance (33, 34) disposée en vis-à-vis de l'autre patte (31, 30). Une distance entre un sommet de chacune des protubérances (33, 34) est sensiblement inférieure au diamètre de l'ouverture 32, de sorte que les protubérances (33, 34) retiennent le tuyau, lorsque ledit tuyau est positionné dans la partie circulaire de l'ouverture 32.

De cette manière, lors de l'assemblage du tuyau et de l'élément 10 d'obturation, ledit tuyau est glissé entre les pattes (30, 31) en direction de la première partie 19 de l'élément 10 d'obturation, de sorte que la section de la partie du tuyau à brider soit sensiblement parallèle au plan 291 de la languette 29. En glissant sur les protubérances (33, 34), le tuyau exerce une pression sur les pattes (30, 31), les contraignant à s'éloigner l'une de l'autre dans le plan 291 de la languette 29. Puis, lorsque le tuyau a glissé au-delà des protubérances (33, 34), les pattes (30, 31) reviennent à leur position de repos. Le tuyau se retrouve alors bloqué dans l'ouverture 32 par les protubérances (33, 34).

L'élément 10 d'obturation a pour avantage d'être modulaire. En effet, l'élément 10 d'obturation permet d'une part d'assurer le remplacement de la pédale d'embrayage en recouvrant l'orifice 17 initialement prévu pour accueillir ladite pédale, et d'autre part de brider le tuyau de frein au moyen de la languette 29 munie des pattes (30, 31), de sorte à éviter que ledit tuyau ne se détériore par frottement contre l'élément 10 d'obturation.

## Revendications

1. Elément (10) d'obturation d'une tôle (11) de véhicule présentant un orifice (17) disposé selon un axe (18), comprenant :
- une première partie (19) recouvrant l'orifice ; et,
- une deuxième partie (23) de forme sensiblement complémentaire avec l'orifice, de sorte que ladite deuxième partie soit apte à être introduite dans ledit orifice,
ladite deuxième partie comportant des moyens (25) d'assemblage par emboîtement élastique, aptes à coopérer avec un bord dudit orifice ;
ledit élément d'obturation comportant en outre au moins un moyen (28) de fixation à au moins une pièce du véhicule et étant **caractérisé en ce que** :
- l'au moins une pièce du véhicule est un tuyau ;
- l'au moins un moyen de fixation comprend une languette (29) disposée sensiblement parallèlement à l'axe de l'orifice,
ladite languette étant munie de deux pattes (30, 31) aptes à se déformer élastiquement, lesdites pattes formant une ouverture (32) sensiblement en forme de U, apte à recevoir le tuyau.

2. Elément d'obturation selon la revendication 1, dans lequel la deuxième partie a sensiblement la forme d'un cylindre creux, la languette étant disposée dans le prolongement de ladite deuxième partie.

3. Véhicule muni d'un élément d'obturation selon l'une des revendications précédentes.

## Patentansprüche

1. Dichtungselement (10) zum Verschließen eines Fahrzeugblechs (11), das eine Öffnung (17) aufweist, die entlang einer Achse (18) angeordnet ist, das Folgendes umfasst:
- einen ersten Teil (19), der die Öffnung abdeckt, und
- einen zweiten Teil (23) mit im Wesentlichen komplementärer Form zu der Öffnung, so dass der zweite Teil geeignet ist, in die Öffnung eingeführt zu werden,
wobei der zweite Teil Mittel (25) zum Zusammenfügen durch elastisches Einrasten umfasst, die geeignet sind, um mit einem Rand der Öffnung zusammenzuwirken,
wobei das Dichtungselement außerdem ein Mittel (28) zum Befestigen an mindestens einem Teil des Fahrzeugs umfasst, und **dadurch gekennzeichnet, dass**:
- das mindestens eine Teil des Fahrzeugs ein Schlauch ist,
- das mindestens eine Befestigungsmittel eine Lasche (29) umfasst, die im Wesentlichen parallel zu der Achse der Öffnung angeordnet ist,
wobei die Lasche mit zwei Pratzen (30, 31) versehen ist, die geeignet sind, sich elastisch zu verformen, wobei die Pratzen eine Öffnung (32) mit im Wesentlichen U-Form bilden, die geeignet ist, den Schlauch aufzunehmen.

2. Dichtungselement nach Anspruch 1, wobei der zweite Teil im Wesentlichen die Form eines Hohlzylinders hat, wobei die Lasche in der Verlängerung des zweiten Teils angeordnet ist.

3. Fahrzeug, das mit einem Dichtungselement nach einem der vorhergehenden Ansprüche versehen ist.

## Claims

1. Sealing element (10) for a metal sheet (11) of a vehicle having an orifice (17) arranged along an axis (18), comprising:
- a first part (19) covering the orifice; and
- a second part (23) having a shape which is substantially complementary to that of the orifice, such that said second part is able to be introduced into said orifice,
said second part comprising elastically interlocking assembly means (25) which are able to cooperate with an edge of said orifice;
said sealing element further comprising at least one means (28) for fixing to at least one part of the vehicle and being **characterised in that**:
- the at least one part of the vehicle is a pipe;
- the at least one means for fixing comprises a tongue (29) arranged substantially parallel to the axis of the orifice,
said tongue being provided with two tabs (30, 31) which are able to be elastically deformed, said tabs forming a substantially U-shaped opening (32) which is able to receive the pipe.

2. Sealing element according to Claim 1, in which the second part has substantially the shape of a hollow cylinder, the tongue being arranged in the extension of said second part.

3. Vehicle provided with a sealing element according to one of the preceding claims.
